# EUROPÄISCHE PATENTANMELDUNG

(11) **EP 1 092 593 A2**
(43) Veröffentlichungstag der Anmeldung: **18.04.2001**
(21) Anmeldenummer: 00120627.5
(22) Anmeldetag: 21.09.2000
(51) Int. Cl.: B60R 11/02

(54) **Autoradio mit Diebstahlschutzeinrichtung**

(30) Priorität: 13.10.1999 DE 19949251
(71) Anmelder: Mannesmann VDO Aktiengesellschaft, 60388 Frankfurt am Main (DE)
(72) Erfinder: Braet, Patrick, 35578 Wetzlar (DE)
(74) Vertreter: Rassler, Andrea, Dipl.-Phys.

(57) **Zusammenfassung**

Es wird ein Autoradio vorgeschlagen, in das Komponenten einer Wegfahrsperre und / oder einer Alarmanlage zumindest teilweise integriert sind. Hierzu ist vorgesehen, daß das Autoradio aus einer fest im Fahrzeug installierten Basiseinheit (1) und einer von der Basiseinheit (1) trennbaren Teileinheit (2) besteht. Ein Sender (10) in der Teileinheit (2) übermittelt Signale zur Deaktivierung der Wegfahrsperre an einen Empfänger (11) in der Basiseinheit (1) in gleicher Weise, wie dies bei bekannten Wegfahrsperren zwischen einem in einem Fahrzeugschlüssel installierten Transponder und einer im Fahrzeug angebrachten Empfangseinheit erfolgt. Das erfindungsgemäße Autoradio kombiniert somit den Diebstahlschutz für das Autoradio mit dem Diebstahlschutz für das gesamte Fahrzeug.

## Beschreibung

Die Erfindung betrifft ein Autoradio mit einer fest im Fahrzeug installierten Basiseinheit und einer mit der Basiseinheit verbindbaren und von der Basiseinheit leicht trennbaren Teileinheit.

Autoradios mit einer Bedieneinheit in Form einer abnehmbaren Bedienblende sind seit längerem bekannt. Die Bedienblende ist mit der Basiseinheit, die fest im Fahrzeug installiert ist, verbindbar und leicht von dieser trennbar. Bei Verlassen des Fahrzeuges kann die Bedieneinheit somit abgenommen und vom Benutzer in einer Tasche mitgeführt werden. Es sind auch Ausführungsformen bekannt, bei denen nur ein Teil der Bedienblende abnehmbar ist und aufgrund der geringen Größe von einem Benutzer beispielsweise am Schlüsselanhänger mitgeführt werden kann. Durch diese bekannten Ausführungsformen ist ein Diebstahlschutz für das Autoradio gegeben, da dieses ohne die Bedieneinheit nicht verwendbar ist.

Aufgabe der Erfindung ist es, ein Autoradio anzugeben, daß einen deutlich verbesserten Diebstahlschutz als bekannte Autoradios gewährleistet.

Die Aufgabe wird dadurch gelöst, daß das Autoradio mit einer Diebstahlschutzeinrichtung eines Kraftfahrzeuges verbindbar ist und die von der Basiseinheit trennbare Teileinheit Mittel zur Deaktivierung der Diebstahlschutzeinrichtung enthält.

Durch die abnehmbare Bedienblende bekannter Autoradios wird lediglich ein Diebstahlschutz für das Autoradio selbst erzielt. Um einen Diebstahlschutz für das gesamte Fahrzeug zu gewährleisten, sind weitere Diebstahlschutzeinrichtungen im Fahrzeug vorhanden. Dabei handele es sich bspw. um eine elektronische Wegfahrsperre oder um eine Alarmanlage. Es sind verschiedene Ausführungsformen von elektronischen Wegfahrsperren bekannt. In der Regel greifen elektronische Wegfahrsperren in die Motorsteuerelektronik ein. Bei aktivierter Wegfahrsperre ist ein Starten des Fahrzeuges nicht möglich.

Die Deaktivierung einer solchen Wegfahrsperre kann auf verschiedenartige Weise erfolgen. In der Regel ist hierzu im Fahrzeugschlüssel ein Sender (Transponder) installiert, der ein kodiertes Signal an eine Empfangseinrichtung im Fahrzeug übermittelt. Das kodierte Signal wird von der Empfangseinrichtung im Fahrzeug dekodiert und mit einem abgespeicherten Signal verglichen. Bei Übereinstimmung des dekodierten empfangenen Signals mit dem abgespeicherten Signal wird die Wegfahrsperre deaktiviert, so daß das Fahrzeug gestartet werden kann.

Erfindungsgemäß ist nunmehr vorgesehen, daß die von der Basiseinheit des Autoradios leicht trennbare Teileinheit die Mittel zur Deaktivierung der Diebstahlschutzeinrichtung enthält, die bei bekannten Diebstahlschutzeinrichtungen bspw. im Fahrzeugschlüssel enthalten sind. Hierdurch wird eine Kombination der Diebstahlsicherung für das Autoradio mit der Diebstahlsicherung für das gesamte Fahrzeug realisiert. Dies ist insbesondere dann von Vorteil, wenn Fahrzeuge nachträglich mit einer Diebstahlschutzeinrichtung versehen werden sollen.

In einer ersten Ausführungsform ist vorgesehen, daß die von der Basiseinheit leicht trennbare Teileinheit die Bedienblende oder ein Teil der Bedienblende des Autoradios ist. In diesem Fall unterscheidet sich das Autoradio rein äußerlich nicht von bisher bekannten Autoradios mit abnehmbarer Bedienblende. In einer zweiten Ausführungsform ist vorgesehen, daß die von der Basiseinheit abtrennbare Teileinheit Teil der Frontblende des Autoradios ist und nur die für die Funktion als Deaktivator der Diebstahlschutzeinrichtung wichtigen Komponenten enthält. Sie kann daher sehr klein ausgeführt werden.

In einer Ausführungsform der Erfindung ist vorgesehen, daß die Basiseinheit eine Empfangseinrichtung zum Empfang der Deaktivierungssignale enthält. Die hierfür erforderlichen elektronischen Bauelemente können ohne weiteres auf einer Platine des Autoradios mit untergebracht werden. Hierdurch ergibt sich eine Kosteneinsparung. Die Übermittlung der Deaktivierungssignale von der von der Basiseinheit trennbaren Teileinheit zur Empfangseinrichtung kann auf verschiedene, an sich bekannte Weise erfolgen.

Beispielsweise kann die Übermittlung induktiv erfolgen, wie dies in der DE 197 36 354 beschrieben ist. Bei den dort beschriebenen Wegfahrsperren ist eine Spule um das Zündschloss und ein Transponder im Fahrzeugschlüssel angeordnet. Der Transponder enthält eine zweite Spule, welche mit der Spule im Zündschloss einen luftgekoppelten Transformator bildet. Über diesen luftgekoppelten Transformator wird Energie zur Versorgung des Transponders übertragen. Zur Übertragung der von dem Transponder als Antwort erzeugten Signale, erfolgt eine Veränderung der Belastung der zweiten Spule, die sich an der ersten Spule durch eine Modulation der Wechselspannung bemerkbar macht. Bei Übertragung dieser bekannten Ausführungsform auf die erfindungsgemäße Ausführungsform in einem Autoradio, sind die im Fahrzeugschlüssel angeordneten Komponenten, also insbesondere der Transponder und die Spule, in der von der Basiseinheit trennbaren Teileinheit des Autoradios angeordnet. Die bei der bekannten Wegfahrsperre im Zündschloss angeordnete Spule befindet sich bei der erfindungsgemäßen Ausführungsform in der Basiseinheit des Autoradios. Die Übertragung von Energie und kodierten Signalen kann dabei wie bei der bekannten Wegfahrsperre erfolgen. Hierzu ist im Transponder eine der Teileinheit eigene Kodierung abgelegt, die bei Energieübertragung von der Basiseinheit zur Teileinheit aktiviert und einem Steuergerät des Kraftfahrzeuges, das mit dem Autoradio verbunden ist, zugeleitet wird. Das Steuergerät des Kraftfahrzeuges vergleicht die Kodierung des übertragenen Signals mit einer Sollkodierung und hebt bei Übereinstimmung die Diebstahlsicherung auf. Zur Erhöhung der Manipulationssicherheit kann die kodierte Information mit Hilfe eines Zufallsgenerators erzeugt werden. Das Steuergerät, das das empfangene Signal mit einem abgespeicherten Signal vergleicht, kann sowohl in der Basiseinheit des Autoradios selbst als auch außerhalb angeordnet sein. Das Steuergerät selbst ist vorzugsweise direkt mit der Motorelektronik verbunden oder in dieser enthalten.

In einer weiteren Ausführungsform ist vorgesehen, daß die von der Basiseinheit trennbare Teileinheit eine Sendeeinheit zum Aussenden von Deaktivierungssignalen und die Basiseinheit eine Empfangseinrichtung zum Empfang dieser Deaktivierungssignale enthält. Die Übermittlung der Deaktivierungssignale kann dabei elektromagnetisch oder optisch erfolgen, insbesondere ist eine Funkübertragung oder eine Infrarotübertragung vorgesehen. Die Grundelemente einer solchen Diebstahlsicherungseinrichtung sind ebenfalls an sich bekannt, wobei bei den bekannten Einrichtungen der Sender wiederum im Fahrzeugschlüssel untergebracht ist, während die Empfangseinrichtung beispielsweise im Innenspiegel des Fahrzeuges untergebracht ist.

In der erfindungsgemäßen Ausführungsform können die gleichen Mittel zur Deaktivierung der Diebstahlsicherung verwendet werden, wie bei den bekannten Wegfahrsperren. Durch die Integration der Mittel in die Basiseinheit eines Autoradios bzw. in eine von der Basiseinheit leicht trennbare Teileinheit, kann jedoch insbesondere bei Nachrüstung eine kostengünstige Kombination einer Diebstahlsicherung für das Fahrzeug als auch für das Autoradio erreicht werden. Die Übermittlung von Deaktivierungssignalen kann darüber hinaus bei der erfindungsgemäßen Ausgestaltung auch elektrisch erfolgen. Hierbei ist eine elektrische Verbindung zwischen der Basiseinheit und der in die Basiseinheit eingeführten trennbaren Teileinheit vorgesehen, so daß die kodierten Signale der Teileinheit direkt über diese Verbindung zur Basiseinheit übermittelt werden. Hierdurch können insbesondere Funk- oder Infrarotübertragungsstrecken entfallen.

Die Aktivierung der Diebstahlschutzeinrichtung erfolgt vorzugsweise mit dem Trennen der Teileinheit von der Basiseinheit entweder unmittelbar oder zeitverzögert.

Die Erfindung wird nachfolgend anhand von Ausführungsbeispielen und der Zeichnung näher erläutert. Es zeigen:
- Figur 1: ein Blockschaltbild
- Figur 2: ein Autoradio mit einer kleinen entnehmbaren Teileinheit
- Figur 3: ein Autoradio mit abnehmbarer Bedienblende
- Figur 4: ein Blockschaltbild der wesentlichen Einzelkomponenten einer Wegfahrsperre.

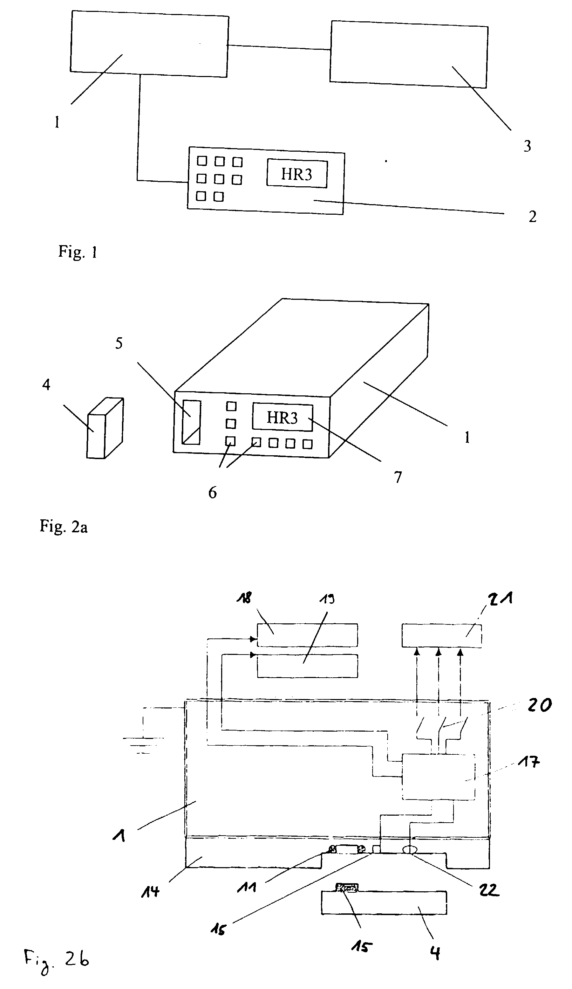

In Figur 1 ist ein einfaches Blockschaltbild eines erfindungsgemäßen Autoradios dargestellt, daß aus einer fest im Fahrzeug installierten Basiseinheit 1 und einer von der Basiseinheit trennbaren Teileinheit 2 besteht. Die von der Basiseinheit 1 trennbare Teileinheit 2 enthält die Mittel zur Deaktivierung einer Wegfahrsperre 3, wobei die Wegfahrsperre 3 mit der Basiseinheit 1 des Autoradios verbunden ist.

In Figur 2a ist ein Autoradio dargestellt, daß aus einer Basiseinheit 1 und einer kleinen, von der Basiseinheit trennbaren Teileinheit 4 besteht, die in eine Öffnung 5 der Basiseinheit 1 eingebracht werden kann. Die Teileinheit 4 enthält den bei bekannten Wegfahrsperren bspw. im Fahrzeugschlüssel enthaltenen Transponder zur Übermittlung von kodierten Signalen an eine in diesem Fall in der Basiseinheit 1 enthaltene Empfangseinrichtung. Die Basiseinheit 1 ist ihrerseits über eine nicht dargestellte Verbindung beispielsweise mit der Motorsteuerung des Fahrzeuges verbunden. Die einzelnen Komponenten einer Wegfahrsperre müssen hier nicht näher beschrieben werden, da sie an sich bekannt sind. Bei dem in Figur 2a dargestellten Ausführungsbeispiel sind die Bedienelemente 6 und die Anzeigeeinheit 7 fest mit der Basiseinheit 1 verbunden.

In Fig. 2b sind wiederum beispielhaft die wesentlichen elektrischen Komponenten eines erfindungsgemäßen Autoradios mit einer kleinen, von der Basiseinheit 1 trennbaren Teileinheit 4 gemäß Fig. 2a dargestellt. Die Basiseinheit 1 weist eine Blende 14 mit den in dieser Darstellungsform nicht dargestellten Bedienelementen auf. Aus der Basiseinheit 1 ist die Teileinheit 4 entnehmbar, wobei die Teileinheit 4 den Transponder 15 enthält. In der Basiseinheit 1 bzw. der Blende 14 ist ein Empfänger 11 zum Empfang der von dem Transponder 15 ausgesendeten Signale vorhanden. Zusätzlich ist ein Detektorelement 16 vorhanden, das ein Signal liefert, wenn die Teileinheit 4 mit der Basiseinheit 1 verbunden ist. Bei dem Detektorelement 16 kann es sich um einen einfachen Schalter handeln. Ferner ist eine Leuchtdiode 22 vorgesehen, die blinkt sobald die Wegfahrsperre aktiviert ist und somit diesen Betriebszustand nach außen hin signalisiert. Ferner enthält die Basiseinheit 1 einen Controller 17. Der Controller 17 ist mit dem Empfangselement 11 und dem Detektorelement 16 verbunden. Wird die Teileinheit 4 mit der Basiseinheit verbunden, so wird über das Detektorelement 16 und den Controller 17 das Empfangselement 11 in einen empfangsbereiten Zustand versetzt. Die von dem Transponder 15 ausgesendeten Signale werden von dem Empfangselement 11 empfangen und dem Controller 17 zugeleitet. Der Controller vergleicht das empfangene Signal mit einem abgespeicherten Muster und deaktiviert bei Übereinstimmung die Wegfahrsperre. Hierzu ist der Controller beispielsweise mit der Batterie 18, dem Zündkontakt 19 und über Schalter 20 mit den Sicherungen 21 verbunden. Wird die Teileinheit 4 von der Basiseinheit 1 getrennt, so wird dies von dem Schalter 16 an den Controller 17 gemeldet, so daß entsprechende elektrische Unterbrechungen zur Aktivierung der Wegfahrsperre vorgenommen werden.

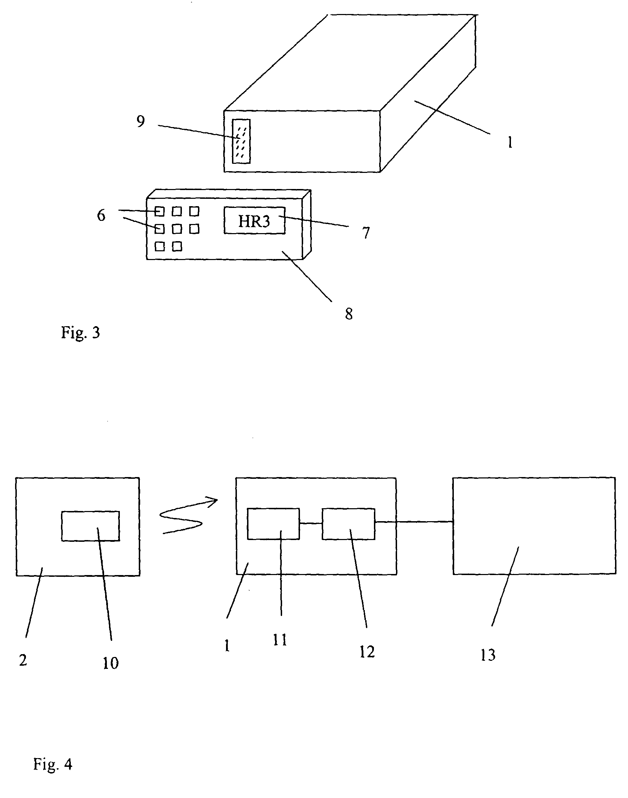

In Figur 3 ist ein Ausführungsbeispiel dargestellt, bei dem das Autoradio aus einer Basiseinheit 1 und einer abnehmbaren Bedienblende 8 besteht. Die abnehmbare Bedienblende 8 enthält in bekannter Weise die Bedienelemente 6 und die Anzeigeeinheit 7 und kann bei Verlassen des Fahrzeuges vom Benutzer mitgeführt werden. Die Verbindung zwischen der Basiseinheit 1 und der Bedienblende 8 erfolgt über eine Schnittstelle 9. In diesem Ausführungsbeispiel enthält die Bedieneinheit 8 den Transponder zur Übermittlung von dekodierten Signalen zu einem Empfänger in der Basiseinheit 1. In der Basiseinheit 1 sind zudem die Mittel zum Vergleich des empfangenen kodierten Signals mit einem abgespeicherten Signal enthalten. Bei Übereinstimmung des empfangenen kodierten Signals mit dem abgespeicherten Signals wird von der Basiseinheit 1 ein entsprechendes Signal an die nicht dargestellte Motorsteuerung gesendet und diese freigegeben. Gleichzeitig werden die Radiofunktionen freigeschaltet. Die abnehmbare Bedienblende 8 dient somit gleichzeitig als Diebstahlschutz für das Autoradio als auch für das gesamte Kraftfahrzeug, da ohne die Bedienblende 8 weder das Autoradio benutzbar ist noch das Fahrzeug gestartet werden kann.

In Figur 4 sind die wesentlichen Komponenten der Wegfahrsperre dargestellt. Die Teileinheit 2 enthält einen Sender 10, der in diesem Falle über eine Funkübertragung kodierte Signale aussendet. Zur Energieversorgung enthält die Teileinheit 2 weiterhin eine nicht dargestellte Batterie, die vorzugsweise über das Bordnetz des Fahrzeuges wiederaufladbar ist. Die von der Sendeeinheit 10 ausgesendeten kodierten Signale werden von der Empfangseinheit 11 in der Basiseinheit 1 aufgefangen und in der Vergleichseinheit 12 mit einem abgelegten Muster verglichen. Bei Übereinstimmung der empfangenen Signale mit dem abgelegten Muster gibt die Vergleichseinheit 12 ein Freigabesignal an die Motorsteuerung 13, so daß anschließend das Fahrzeug gestartet werden kann. In einer Abwandlung dieser Ausführungsform kann die Vergleichseinheit 12 direkt in die Motorsteuerung integriert sein.

Die Aktivierung der Wegfahrsperre erfolgt beim Entnehmen der Teileinheit 2 aus der Basiseinheit 1 bspw. dadurch, daß eine elektrische Verbindung zwischen diesen beiden Einheiten gelöst wird, oder durch Abziehen des Zündschlüssels oder dgl. Dies wird von der Vergleichseinheit 12 registriert, die ein entsprechendes Signal an die Motorsteuerung 13 sendet, wodurch diese ein Starten des Fahrzeuges verhindert. Über die beschriebene Aktivierung der Wegfahrsperre hinaus kann nach Entnehmen der Teileinheit 2 aus der Basiseinheit 1 zeitverzögert ein Schließen der Fenster und des Schiebedaches, ein Unterbrechen elektrischer Kreise, Verschließen der Fahrzeugtüren und so weiter erfolgen.

Die Erfindung wurde vorstehend im wesentlichen im Zusammenhang mit einer Wegfahrsperre erläutert, jedoch ist in gleicher Weise die Aktivierung und Deaktivierung einer Alarmanlage oder sowohl einer Wegfahrsperre als auch einer Alarmanlage möglich.

## Patentansprüche

1. Autoradio mit einer fest im Fahrzeug installierten Basiseinheit (1) und einer mit der Basiseinheit verbindbaren und von der Basiseinheit leicht trennbaren Teileinheit (2; 4; 8), dadurch gekennzeichnet, daß das Autoradio mit einer Diebstahlschutzeinrichtung eines Kraftfahrzeugs verbindbar ist und die von der Basiseinheit (1) trennbare Teileinheit (2; 4; 8) Mittel (10) zur Deaktivierung der Diebstahlschutzeinrichtung enthält.

2. Autoradio nach Anspruch 1, dadurch gekennzeichnet, daß die von der Basiseinheit trennbare Teileinheit eine Bedienblende (8) des Autoradios ist.

3. Autoradio nach Anspruch 1, dadurch gekennzeichnet, daß die von der Basiseinheit trennbare Teileinheit Teil einer Bedienblende des Autoradios ist.

4. Autoradio nach einem der vorhergehenden Ansprüche, dadurch gekennzeichnet, daß die Basiseinheit (1) eine Empfangseinrichtung (11) zum Empfang von Deaktivierungssignalen enthält.

5. Autoradio nach Anspruch 4, dadurch gekennzeichnet, daß die Übermittlung von Deaktivierungssignalen induktiv erfolgt.

6. Autoradio nach einem der vorhergehenden Ansprüche, dadurch gekennzeichnet, daß die von der Basiseinheit (1) trennbare Teileinheit (2; 4; 8) eine Sendeeinheit (10) zum Aussenden von Deaktivierungssignalen enthält.

7. Autoradio nach einem der vorhergehenden Ansprüche, dadurch gekennzeichnet, daß die Übermittlung von Deaktivierungssignalen elektromagnetisch erfolgt.

8. Autoradio nach einem der vorhandenen Ansprüche, dadurch gekennzeichnet, daß die Übermittlung von Deaktivierungssignalen optisch erfolgt.

9. Autoradio nach einem der vorhergehenden Ansprüche, dadurch gekennzeichnet, daß die Übermittlung von Deaktivierungssignalen elektrisch erfolgt.

10. Autoradio nach einem der vorhergehenden Ansprüche, dadurch gekennzeichnet, daß eine Aktivierung der Diebstahlschutzeinrichtung mit dem Trennen der Teileinheit (2; 4; 8) von der Basiseinheit (1) erfolgt.

11. Autoradio nach einem der vorhergehenden Ansprüche 1 bis 9, dadurch gekennzeichnet, daß eine Aktivierung der Diebstahlschutzeinrichtung zeitverzögert nach Trennen der Teileinheit (2; 4; 8) von der Basiseinheit (1) erfolgt.

12. Autoradio nach einem der vorhergehenden Ansprüche, dadurch gekennzeichnet, daß es sich bei der Diebstahlschutzeinrichtung um eine elektronische Wegfahrsperre handelt.

13. Autoradio nach einem der vorhergehenden Ansprüche, dadurch gekennzeichnet, daß es sich bei der Diebstahlschutzeinrichtung um eine Alarmanlage handelt.
